# FASCICULE DE BREVET EUROPEEN

(11) **EP 1 632 129 B1**
(45) Date de publication et mention de la délivrance du brevet: **20.02.2008**
(21) Numéro de dépôt: 05291754.9
(22) Date de dépôt: 18.08.2005
(51) Int. Cl.: A01D 75/18

(54) **Faucheuse-débroussailleuse comportant un bloc d'orientation commandé par un vérin d'orientation**
Grasmäher zum Gestrüpp-Ausreissen mit einer durch eine Stellwinde gesteuerten Lenkeinheit
Brush-cutting mower with an orientation bloc driven by an orientation cylinder

(30) Priorité: 02.09.2004 FR 0409281
(43) Date de publication de la demande: 08.03.2006
(73) Titulaire: Noremat, 54710 Ludres (FR)
(72) Inventeur: Saleur, Philippe, 54000 Nancy (FR); Labat, Jean-Pierre, 54840 Gondreville (FR); George, Yvan, 54119 Domgermain (FR)
(74) Mandataire: Laget, Jean-Loup

(56) Documents cités:
- EP-A- 0 022 283
- EP-A- 0 073 360
- US-A- 3 308 611

## Description

L'invention est relative à une faucheuse-débroussailleuse, du type comportant un bâti sur lequel est articulé un bloc d'orientation commandé par un vérin d'orientation (voir le document US-A-3 308 611).

On connaît des faucheuses-débroussailleuses fabriquées par la société NOREMAT de droit français, et commercialisées notamment sous les dénominations MAGISTRA (marque déposée) et TONICA (marque déposée).

Ces faucheuses-débroussailleuses de type connu comportent un bâti sur lequel est articulé un bloc d'orientation commandé par un vérin d'orientation. Le bloc d'orientation supporte à rotation autour d'un axe horizontal au moins un bras portant une tête de travail.

Ces faucheuses-débroussailleuses de type connu sont généralement portées par un tracteur agricole ou véhicule porteur similaire conduit par un opérateur.

Lorsque le tracteur agricole ou véhicule similaire recule, un effort peut se produire au contact d'un obstacle risquant d'endommager la machine et en particulier risquant d'endommager le vérin d'orientation qui arrive en butée mécanique.

La venue en butée du vérin d'orientation soumis de ce fait à un effort important de l'ordre de plusieurs tonnes entraîne des risques d'endommagement de la machine, en particulier du vérin d'orientation, ou de ses liaisons avec le bâti de la machine.

La rupture du vérin d'orientation, ou de ses liaisons avec le bâti de la machine entraîne alors des risques de collision des bras et têtes de travail de la machine avec le tracteur agricole ou véhicule porteur similaire, pouvant ainsi provoquer un accident grave.

Un premier but de l'invention est de remédier aux inconvénients de la technique connue, en fournissant une nouvelle faucheuse-débroussailleuse, dans laquelle le risque d'endommagement du vérin d'orientation est notablement réduit, ou supprimé.

Un deuxième but de l'invention est de fournir une machine dans laquelle le vérin d'orientation, les bras et têtes de travail de la machine sont escamotés vers l'avant au contact d'un obstacle, lorsque le tracteur ou véhicule similaire portant la machine circule en marche arrière.

L'invention a pour objet une machine du genre faucheuse-débroussailleuse, du type comportant un bâti, sur lequel est articulé un bloc d'orientation commandé par un vérin d'orientation, ledit bloc d'orientation supportant à rotation autour d'un axe au moins un bras portant une tête de travail, caractérisée par le fait que la machine comporte un support de vérin d'orientation précontraint en position, et mobile lorsqu'un bras ou une tête de travail rencontre un obstacle lors du recul de la faucheuse-débroussailleuse, de manière à autoriser un escamotage vers l'avant des vérins d'orientation, bras et tête de travail.

Selon d'autres caractéristiques alternatives de l'invention :
- le support de vérin d'orientation présente une conformation en chape d'articulation du vérin d'orientation ;
- le support de vérin d'orientation est précontraint par un organe de précontrainte contenant un moyen élastique monté entre une paroi solidaire du bâti et un appui solidaire de l'organe de précontrainte ;
- le support de vérin d'orientation est articulé par rapport au bâti autour d'un axe solidaire du bâti ;
- le bâti présente une chemise fixe de logement de l'organe de précontrainte ;
- l'organe de précontrainte présente deux bras passant par des passages ouverts dans une paroi solidaire du bâti ;
- l'organe de précontrainte présente deux têtes adaptées à des alésages du support de vérin d'orientation ;
- le support de vérin d'orientation présente deux passages pour les bras de l'organe de précontrainte ;
- l'axe d'articulation du support de vérin d'orientation est fixé au bâti par des paliers de rotation ;
- l'axe d'articulation du support de vérin d'orientation est fixé au bâti sans liberté de rotation.

L'invention sera mieux comprise grâce à la description qui va suivre donnée à titre d'exemple non limitatif en référence aux dessins annexés dans lesquels :
- La figure 1 représente schématiquement une vue de dessus d'une machine selon l'invention en cours de recul.
- La figure 2 représente schématiquement, une vue de dessus d'une machine selon l'invention en cours de recul et en position d'escamotage vers l'avant des vérins d'orientation, bras et tête de travail au contact d'un obstacle.
- La figure 3 représente schématiquement une vue en perspective agrandie avec arrachement partiel d'une machine selon l'invention.
- La figure 4 représente schématiquement une vue partielle agrandie en perspective éclatée des éléments constitutifs essentiels d'une machine selon l'invention.

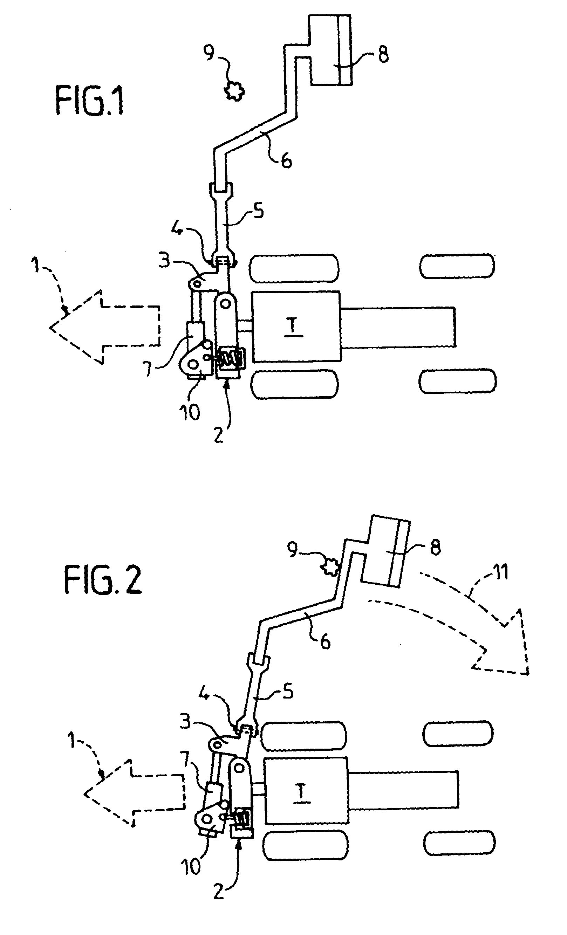

En référence aux figures 1 à 4, les éléments identiques ou fonctionnellement équivalents sont repérés par des chiffres de référence identiques.

Sur la figure 1, un tracteur T portant une machine selon l'invention est en cours de recul dans le sens de la flèche 1.

La machine selon l'invention comporte un bâti 2, sur lequel est articulé un bloc 3 d'orientation.

Le bloc 3 d'orientation supporte à rotation autour d'un axe 4 horizontal au moins un bras 5 ou 6 portant une tête 8 de travail.

L'orientation du bloc 3 est commandée par le vérin 7 d'orientation monté entre un axe solidaire du bloc 3 d'orientation et un support 10 solidaire du bâti 2.

Sur la figure 2, lorsque le tracteur T continue à reculer dans le sens de la flèche 1, le bras 6 portant la tête de travail 8 vient au contact d'un obstacle 9.

Le couple exercé par l'obstacle 9 sur l'ensemble des éléments orientés de machine selon l'invention exerce un effort sur les bras 5 et 6, sur le pivot 3 d'orientation et sur le vérin 7 d'orientation.

Le couple exercé par l'obstacle 9 sur les éléments 3 à 7 précités est transmis au support 10 du vérin 7 d'orientation.

Le support 10 du vérin d'orientation précontraint dans la position normale de la figure 1 est alors entraîné en rotation, dans un sens correspondant à l'escamotage simultané vers l'avant dans le sens de la flèche 11, du vérin 7 d'orientation, du pivot 3 d'orientation, des bras 5 et 6 et de la tête de travail 8.

Cette rotation vers l'avant des éléments 3 à 8 précités, dans le sens de la flèche 11, avertit l'opérateur placé dans la cabine du tracteur T d'avoir à immobiliser l'ensemble circulant afin de dégager la machine selon l'invention de l'obstacle 9.

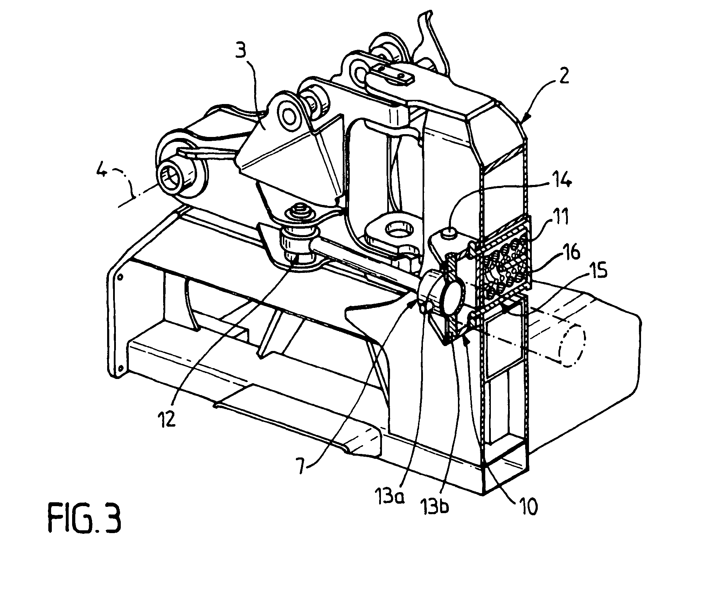

Sur la figure 3, la machine selon l'invention comportant le bâti 2, le bloc 3 d'orientation et l'axe 4 d'articulation des bras 5 ou 6 comporte également un support 10 du vérin 7 d'orientation précontraint en position par la force élastique d'un ressort 11, de préférence un ressort 11 hélicoïdal, ou précontraint en position par la force d'un organe élastique en matériau composite ou plastique, ou précontraint en position par un vérin hydraulique à simple effet et à rappel élastique.

Le vérin 7 d'orientation est monté du côté de la tige sur le bloc 3 par l'intermédiaire d'un axe 12 et est monté par son cylindre présentant deux bouts d'axe 13a, 13b sur le support 10.

Le support 10 est articulé sur le bâti 2 autour d'un axe 14 et coopère également avec un organe mobile 15 de précontrainte constituant un logement 16 pour le ressort 11.

L'axe 14 d'articulation du support 10 sur ledit bâti 2 peut être monté par l'intermédiaire de deux paliers 17a, 17b sur le bâti 2, l'essentiel étant que le support 10 puisse être mobile à l'encontre du ressort 11 lorsqu'il est soumis à une traction latérale prédéterminée supérieure à la résistance du ressort 11.

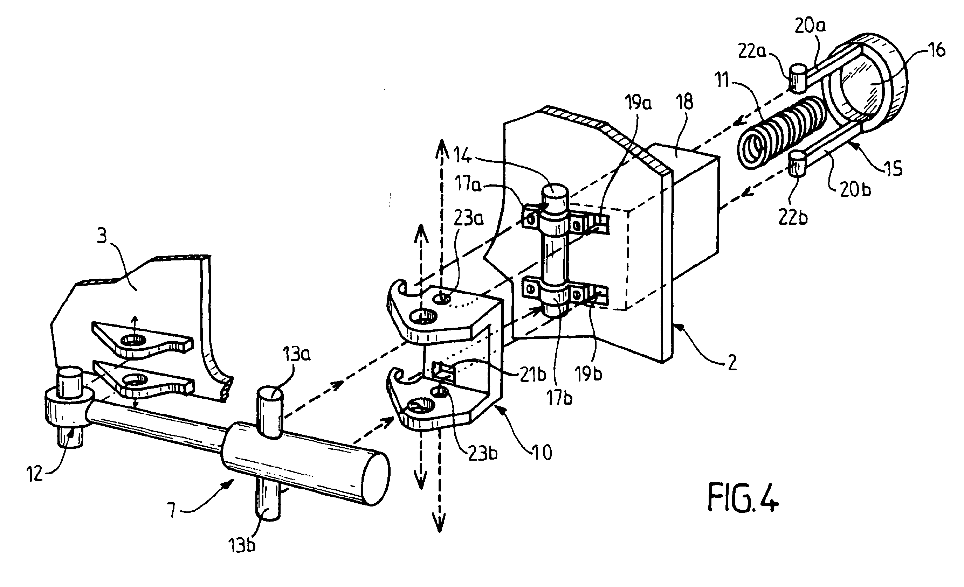

Sur la figure 4, la machine selon l'invention présente un support 10 en forme de chape 10 de montage des extrémités 13a, 13b du cylindre du vérin 7.

La chape 10 de montage est montée articulée autour de l'axe 14 fixe ou mobile par rapport au bâti 2.

La bâti 2 comporte de préférence une chemise fixe 18 recevant l'organe 15 mobile de précontrainte soumis à la poussée du ressort 11 monté entre le fond 16 de l'organe 15 mobile de précontrainte et la paroi intérieure de la chemise fixe 18.

Deux fentes 19a, 19b sont prévues dans la paroi du bâti 2 pour permettre le coulissement libre des bras 20a, 20b de l'organe mobile 15.

La chape 10 présente également deux fentes 21a, 21b permettant librement le passage des bras 20a, 20b portant les demi-axes 22a, 22b.

Ces demi-axes 22a, 22b viennent se monter dans des alésages 23a, 23b de la chape 10 de montage des extrémités 13a, 13b du cylindre du vérin 7.

L'agencement du montage ainsi décrit peut être modifié sans sortir du cadre de la présente invention, l'essentiel étant de prévoir un support 10 du vérin 7 d'orientation précontraint en position et mobile pour permettre l'escamotage de l'ensemble des éléments orientés lorsque la tête de travail ou un bras portant la tête de travail rencontre un obstacle lors du recul de la faucheuse-débroussailleuse selon l'invention.

## Revendications

1. - Machine du genre faucheuse-débroussailleuse, du type comportant un bâti (2), sur lequel est articulé un bloc (3) d'orientation commandé par un vérin (7) d'orientation, ledit bloc (3) d'orientation supportant à rotation autour d'un axe (4) au moins un bras (5 ou 6) portant une tête de travail (8), **caractérisée par le fait que** la machine comporte un support (10) de vérin (7) d'orientation précontraint en position, et mobile lorsqu'un bras (5 ou 6) ou une tête (8) de travail rencontre un obstacle (9) lors du recul (1) de la faucheuse-débroussailleuse, de manière à autoriser un escamotage vers l'avant (11) des vérin (7) d'orientation, bras (5 ou 6) et tête de travail (8).

2. - Machine selon la revendication 1, **caractérisée par le fait que** le support (10) de vérin (7) d'orientation présente une conformation en chape (10) d'articulation du vérin (7) d'orientation.

3. - Machine selon la revendication 1 ou la revendication 2, **caractérisée par le fait que** le support (10) de vérin (7) d'orientation est précontraint par un organe (15) de précontrainte contenant un moyen élastique (11) monté entre une paroi solidaire du bâti (2) et un appui (16) solidaire de l'organe (15) de précontrainte.

4. - Machine selon la revendication 1 ou la revendication 2, **caractérisée par le fait que** le support (10) de vérin (7) d'orientation est articulé par rapport au bâti (2) autour d'un axe (14) solidaire du bâti (2).

5. - Machine selon la revendication 3, **caractérisée par le fait que** le bâti (2) présente une chemise fixe (18) de logement de l'organe (15) de précontrainte.

6. - Machine selon la revendication 3 ou la revendication 5, **caractérisée par le fait que** l'organe (15) de précontrainte présente deux bras (20a, 20b) passant par des passages (19a, 19b) ouverts dans une paroi solidaire du bâti (2).

7. - Machine selon la revendication 6, **caractérisée par le fait que** l'organe (15) de précontrainte présente deux têtes (22a, 22b) adaptées à des alésages (23a, 23b) du support (10) de vérin (7) d'orientation.

8. - Machine selon la revendication 6 ou la revendication 7, **caractérisée par le fait que** le support (10) de vérin d'orientation présente deux passages (21 a, 21 b) pour les bras (20a, 20b) de l'organe (15) de précontrainte.

9. - Machine selon la revendication 4, **caractérisée par le fait que** l'axe (14) d'articulation du support (10) de vérin (7) d'orientation est fixé au bâti (2) par des paliers (17a, 17b) de rotation.

10. - Machine selon la revendication 4, **caractérisée par le fait que** l'axe (14) d'articulation du support (10) de vérin (7) d'orientation est fixé au bâti (2) sans liberté de rotation.

## Claims

1. A machine of the side-arm flail mower type, of the type comprising a frame (2), on which is articulated a steering block (3) controlled by a steering cylinder (7), said steering block (3) supporting at least one arm (5 or 6) bearing a working head (8) so as to rotate about a pin (4), **characterised by** the fact that the machine comprises a support (10) for the steering cylinder (7) which is prestressed in position, and mobile when an arm (5 or 6) or a working head (8) encounters an obstacle (9) during the backward movement (1) of the side-arm flail mower, so as to permit the steering cylinder (7), arm (5 or 6) and working head (8) to be retracted towards the front (11).

2. A machine according to Claim 1, **characterised by** the fact that the support (10) of the steering cylinder (7) is shaped like a clevis (10) for articulating the steering cylinder (7).

3. A machine according to Claim 1 or Claim 2, **characterised by** the fact that the support (10) of the steering cylinder (7) is prestressed by a prestressing element (15) containing an elastic means (11) mounted between a wall integral with the frame (2) and a support (16) integral with the prestressing element (15).

4. A machine according to Claim 1 or Claim 2, **characterised by** the fact that the support (10) of the steering cylinder (7) is articulated relative to the frame (2) about a pin (14) integral with the frame (2).

5. A machine according to Claim 3, **characterised by** the fact that the frame (2) has a fixed jacket (18) for housing the prestressing element (15).

6. A machine according to Claim 3 or Claim 5, **characterised by** the fact that the prestressing element (15) has two arms (20a, 20b) passing through open passages (19a, 19b) in a wall integral with the frame (2).

7. A machine according to Claim 6, **characterised by** the fact that the prestressing element (15) has two heads (22a, 22b) matched to bores (23a, 23b) in the support (10) of the steering cylinder (7).

8. A machine according to Claim 6 or Claim 7, **characterised by** the fact that the support (10) ofthe steering cylinder has two passages (21a, 21b) for the arms (20a, 20b) of the prestressing element (15).

9. A machine according to Claim 4, **characterised by** the fact that the hinge pin (14) of the support (10) of the steering cylinder (7) is fixed to the frame (2) by rotation bearings (17a, 17b).

10. A machine according to Claim 4, **characterised by** the fact that the hinge pin (14) ofthe support (10) ofthe steering cylinder (7) is fixed to the frame (2) without freedom of rotation.

## Patentansprüche

1. Maschine zum Grasmähen/Ausreißen von Gestrüpp, der Art mit einem Gestell (2), an dem ein über einen Ausrichtzylinder (7) gesteuertes Ausrichtteil (3) angelenkt ist, wobei das Ausrichtteil (3) mindestens einen Arm (5 oder 6), der einen Arbeitskopf (8) trägt, um eine Achse (4) verdrehbar lagert, **dadurch gekennzeichnet, daß** die Maschine eine Halterung (10) für den Ausrichtzylinder (7) trägt, der in seiner Lage vorgespannt und beweglich ist, sobald ein Arm (5 oder 6) oder ein Arbeitskopf (8) beim Rücklauf (1) der Maschine zum Grasmähen/Ausreißen von Gestrüpp auf ein Hindernis (9) trifft, um ein Umklappen des Ausrichtzylinders (7), des Arms (5 oder 6) und des Arbeitskopfes (8) nach vorne (11) zu gestatten.

2. Maschine nach Anspruch 1, **dadurch gekennzeichnet, daß** die Halterung (10) für den Ausrichtzylinder (7) als Gelenkbügel (10) für den Ausrichtzylinder (7) ausgestaltet ist.

3. Maschine nach Anspruch 1 oder Anspruch 2, **dadurch gekennzeichnet, daß** die Halterung (10) des Ausrichtzylinders (7) durch ein Vorspannorgan (15) vorgespannt ist, das ein elastisches Mittel (11) aufweist, welches zwischen einer fest mit dem Gestell (2) verbundenen Wand und einem fest mit dem Vorspannorgan (15) verbundenen Auflager (16) montiert ist.

4. Maschine nach Anspruch 1 oder Anspruch 2, **dadurch gekennzeichnet, daß** die Halterung (10) des Ausrichtzylinders (7) relativ zum Gestell (2) um eine fest mit dem Gestell (2) verbundene Achse (14) verschwenkbar angebracht ist.

5. Maschine nach Anspruch 3, **dadurch gekennzeichnet, daß** das Gestell (2) eine feste Ummantelung (18) für eine Aufnahme des Vorspannorgans (15) aufweist.

6. Maschine nach Anspruch 3 oder Anspruch 5, **dadurch gekennzeichnet, daß** das Vorspannorgan (15) zwei Arme (20a, 20b) aufweist, die durch offene Durchführungen (19a, 19b) in einer fest mit dem Gestell (2) verbundenen Wand hindurchlaufen.

7. Maschine nach Anspruch 6, **dadurch gekennzeichnet, daß** das Vorspannorgan (15) zwei Köpfe (22a, 22b) aufweist, die an Bohrungen (23a, 23b) der Halterung (10) des Ausrichtzylinders (7) angepaßt sind.

8. Maschine nach Anspruch 6 oder Anspruch 7, **dadurch gekennzeichnet, daß** die Halterung (10) des Ausrichtzylinders zwei Durchführungen (21a, 21b) für die Arme (20a, 20b) des Vorspannorgans (15) aufweist.

9. Maschine nach Anspruch 4, **dadurch gekennzeichnet, daß** die Achse (14) zum Verschwenken der Halterung (10) des Ausrichtzylinders (7) mittels Drehlagern (17a, 17b) am Gestell (2) befestigt ist.

10. Maschine nach Anspruch 4, **dadurch gekennzeichnet, daß** die Achse (14) zum Verschwenken der Halterung (10) des Ausrichtzylinders (7) drehfest am Gestell (2) befestigt ist.
